# EUROPEAN PATENT SPECIFICATION

(11) **EP 1 684 600 B1**
(45) Date of publication and mention of the grant of the patent: **24.02.2016**
(21) Application number: 04769630.7
(22) Date of filing: 14.10.2004
(51) Int. Cl.: A23N 1/02

(54) **PROCESS FOR EXTRACTING JUICE OR PUREE FROM FOOD IN A CONTROLLED ENVIRONMENT**
VERFAHREN ZUR EXTRAKTION VON SAFT UND PUREE VON LEBENSMITTELN IN EINER KONTROLLIERTEN ATMOSPHERE
PROCEDE PERMETTANT L'EXTRACTION SOUS ATMOSPHERE CONTROLEE DE JUS OU DE PUREE A PARTIR D'UN ALIMENT

(30) Priority: 21.10.2003 IT PI20030079
(43) Date of publication of application: 02.08.2006
(73) Proprietor: Bertocchi, Alessandro, 43100 Parma (IT)
(72) Inventor: Bertocchi, Alessandro, 43100 Parma (IT)
(74) Representative: Celestino, Marco
(86) International application number: PCT/IB2004/003347
(87) International publication number: WO 2005/036993

(56) References cited:
- FR-A- 2 147 449
- US-A- 3 714 887
- US-A- 4 721 627

## Description

### Field of the invention

The present invention relates to machines for the food industry and in particular it relates to the extraction of juice or puree from vegetable or animal food.

In particular, the invention relates to a process for carrying out said extraction in a controlled environment.

Furthermore, the invention relates to an extracting apparatus that carries out this process.

### Background of the invention

As known, a variety exists of types of rotating machines (rough and fine extractors) for obtaining juice or puree mainly from vegetable food, fruit and vegetables, but also from animal food, meat and fish.

Normally, the product to treat is previously softened or chopped more or less finely in a first step for then being put into a second step in an extracting machine. The extracting machines of prior art are essentially made up of a fixed structure that comprises a perforated sheet of cylindrical or conic shape, also called screen, and a bladed rotor that rotates inside. The rotor is fitted on a shaft which rotates quickly driven by a motor. In particular, the chopped or softened product is pushed radially by a centrifugal force continuously against the screen. This way, the product passes through the screen as a liquid part (juice) and/or solid part but homogeneous (puree) and is then is conveyed for further treatments. The solid parts that do not pass through the screen, instead, are pushed axially opposite to the inlet and are automatically conveyed as waste to dispose of see for example IT1199392.

A known process of this kind is the extraction at room temperature (also called "cold extraction") that is carried out in two steps: softening the food pulps by a plurality of pulses in quick succession (see IT1249363) and then separation in an extracting apparatus the target parts (juice and puree) from the waste solid parts.

The extraction at room temperature is preferably associated to a quick de-aeration always at room temperature (see WO02058489).

Another known process of this kind is the "hot" extraction, which softens the food pulps by means of heating before enter the extraction apparatus.

Air is detrimental to puree since it contains oxygen and for different reasons:
- it damages the product and changes its colour triggering oxidative and pectolytic enzymatic processes;
- when the puree is put in large reservoirs, the presence of air assists the separation for floatation of the fibres from the liquid;
- in case of extraction at room temperature, the product extracted is then subject to enzymatic inactivation, by means of short but intense heating, and the product should be heated without the presence of oxygen.

Vacuum extraction processes have been studied, for reducing the presence of air during the extraction. An example of such an extraction process has been disclosed in US4721627. Another example is disclosed in FR2147449 that described an extraction machine for producing juice from grapes.

However, such processes have the problem that the vacuum attracts air from points even distant upstream from or downstream of the extraction zone, frustrating the effects of the vacuum extraction.

### Summary of the invention

It is therefore a feature of the invention to provide a process for obtaining juice or puree from food that, during the extraction, minimizes the presence of oxygen in the puree or in the juice.

It is another feature of the invention to provide an extracting apparatus capable of carrying out this process.

These and other features are accomplished with one exemplary process for extracting in a controlled environment juice or puree from a product based on animal or vegetable food, the extraction being carried out in an extracting machine starting from a previously softened product, the extracting machine comprising:
- a stator having at least one inlet and at least a first and a second outlet, a screen in the stator with a plurality of holes, at least one bladed rotor that rotates within the screen;
   wherein the steps are provided of:
- feeding the previously softened product through the inlet;
- extracting puree or juice by means of a rotation of the rotor that pushes the softened product against the screen, with production of puree or juice through the first outlet;
- disposing of the waste not passed through the screen through the second outlet;
   whose main feature is to provide the further steps of:
   - feeding said softened product at a predetermined section upstream from the inlet;
   - controlling the conveyance of the softened product between said predetermined section and the inlet, preventing air from being attracted forward through said section;
   - controlling the conveyance of the juice or puree through said first outlet, preventing air from being attracted back in the stator through the first outlet;
   - controlling the conveyance of the waste in the second outlet, preventing air from being attracted back in the stator through the second outlet;
   wherein the product is fed from the upstream section to said inlet according to a certain head of softened product created within a storage unit, the pressure of said head causing the absence of air bubbles and preventing air from being attracted through said section;
   and wherein a sensing step is provided of the level of said softened product in the storage unit that generate a level signal, said sensing step carried out by a sensor means, said controlled conveyance of said softened product from said upstream section to said inlet being responsive to said level signal generated by said sensor means.

Advantageously, a baric control is provided of the conditions of positive pressure/ vacuum of the product in the stator with respect to the atmosphere, in order to prevent air from being attracted into the stator through the first and the second outlet and said section.

Preferably, the controlled conveyance of the juice or puree through said first outlet is carried out by a vacuum pump, in particular a single-screw pump.

Advantageously, the controlled conveyance of the juice or puree through said first outlet is carried out by a further extracting machine, i.e. a fine extractor arranged downstream, followed by a vacuum pump, in particular a single-screw pump.

In a preferred exemplary embodiment, the controlled conveyance of the waste in the second outlet is made through means for pushing the waste in a duct downstream of the second outlet that leads the waste to a discharge mouth, a closure member of the discharge mouth being provided forming a pile of waste in the duct slowly moving towards the discharge mouth, the pile moving towards the discharge mouth acting as a plug against the attraction of air back in the stator against the flow of the waste, means being provided for controlling the pressure of the closure member for adjusting the flow of the pile through the discharge mouth.

Preferably, the step of controlling the pressure of the closure member for controlling the conveyance of the waste is carried out responsive to the pressure/vacuum conditions in the stator.

In a first preferred exemplary embodiment of the invention, the step of controlling the conveyance of the softened product between said predetermined section and the inlet is carried out arranging choking means and means for adjusting an opening grade of the choking means at said section, whereby the product moves pushed by the head from said section to the inlet in vacuum conditions, and the extraction is carried out in the stator in vacuum conditions.

In this case, the choking means preferably have a choking valve at said section.

Alternatively, the means for controlling the conveyance have a pump, such as a single-screw pump, the means for adjusting causing a rotation of the pump so that downstream of the pump there are vacuum conditions.

In a further alternative embodiment, the means for controlling the conveyance have a peristaltic pump, suction means being provided upstream from the peristaltic pump, whereby downstream of the pump there are vacuum conditions.

In a second exemplary embodiment of the invention, the step of controlling the conveyance of the product without air between said predetermined section and the inlet is carried out arranging pumping means and means for adjusting the pumping means at said section, whereby the product moves from said section to the inlet in conditions of positive pressure, and the extraction is carried out in the stator in conditions of positive pressure. This condition prevents the attraction of air from the outside, and gas not containing oxygen can be pumped in the stator, or a reduced amount of air containing then not much oxygen, for keeping the conditions of positive pressure.

In this case, the pumping means at said section advantageously have a single-screw pump, the means for adjusting causing a rotation of the pump so that downstream of the pump there are conditions of positive pressure.

Always in this case, the baric control of the conditions of positive pressure in the stator provide the introduction of gas in the stator. In this case, the controlled conveyance of the juice or puree towards the first outlet, to assure the conditions of positive pressure, is associated downstream of the first outlet to a reservoir for the storage of the juice or puree, with a gas in pressure that fills the vacuum fraction of the reservoir.

The gas is selected from the group: an inert gas; a gas reacting with the product capable of causing chemical reactions for decelerating or inhibiting the enzymatic and pectolytic processes; air, in small amount, for keeping the conditions of positive pressure.

Preferably, the gas reacting with the product is ozone.

According to another aspect of the invention, an apparatus is provided for extracting juice or puree from a softened animal or vegetable food, capable of carrying out the above described process.

### Brief description of the drawings

The invention will now shown with the following description of an exemplary embodiment thereof, exemplifying but not limitative, with reference to the attached drawings, wherein:
- figure 1 shows a diagrammatical view of a first exemplary embodiment of a process according to the invention for extracting puree or juice from food;
- figure 2 shows a block diagram of the waste outlet zone;
- figure 3 shows a diagrammatical view of a second exemplary embodiment of a process according to the invention for extracting puree or juice from food.

### Description of a preferred exemplary embodiment

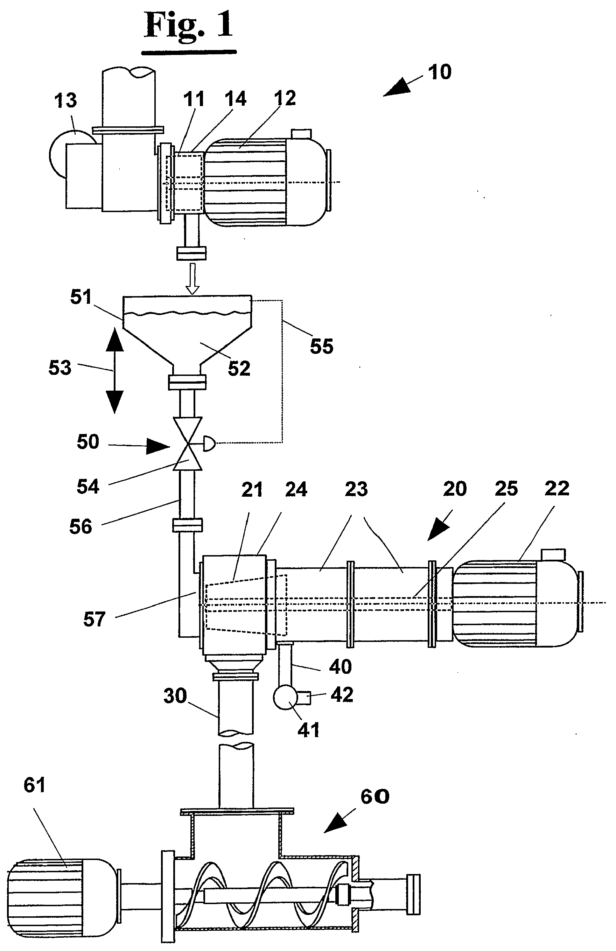

With reference to figure 1, a process for obtaining juice or puree from vegetable or animal food provides a step of feeding the food, such as fruit and vegetables, meat or fish, whole or chopped, up to a softening apparatus 10.

In case of extraction at room temperature, in apparatus 10 a first rotor 11 is provided operated by a motor 12 and that applies to the product at inlet, conveyed through a duct 13, a plurality of pulses in quick succession against a stator 14, which has protrusions on the inner surface, for example as described in IT1249363.

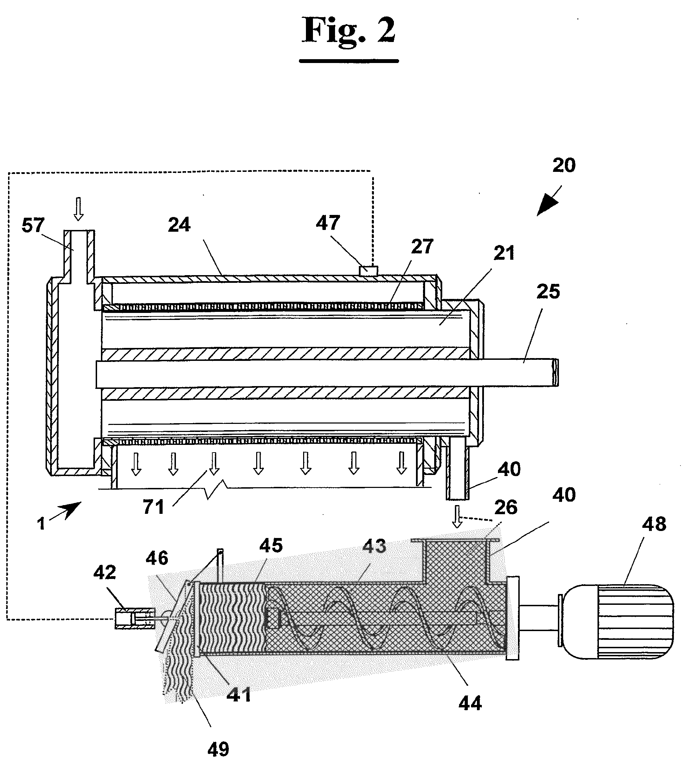

The softened product 15, exiting from the first apparatus 10, must reach an extracting apparatus 20, where the separation is carried out of the parts that can be used (juice or puree), which are conveyed in a first outlet 30, from the waste solid parts (peelings, seeds, hard fibres), conveyed in a second outlet 40. In this second apparatus 20 a second rotor 21, which is operated by a motor 22 and has a shaft 25 mounted on supports 23, engages in a screen 26 (figure 2) of equal size and arranged according to a stator 24, as described in IT1199392.

According to the invention, upstream from extracting apparatus 20 a section 50 is provided. Through section 50 softened product 15 enters and proceeds under a controlled conveyance up to an extracting apparatus 20 for preventing the attraction of air into the latter.

A storage unit 51 gathers in 52 the softened product 15 with the production of a head 53 that pushes against said section 50. At said section a choking adjustable valve 54 can be inserted, so that the product moves pushed by the head 53 in the duct 56 downstream of said section 50 in vacuum conditions for Venturi effect, up to the inlet 57 in extracting apparatus 20. This way, the extracting steps occur in vacuum conditions and the continuous controlled flow of the softened product 52 avoids the production of air bubbles or the attraction of air from the outside.

The conveyance of the softened product can be carried out a sensor 55 of the height of head 53. This way, the opening/closing pace of valve 54 is responsive to a signal provided by control sensor 55.

Always to avoid the production of air bubbles a step of controlled conveyance of the juice or puree is provided also at the first outlet 30, to assure a full filling of the stator in the space external to rotor/screen 21. This can be attained by a single-screw pump 60, which assures a vaccum condition, operated by a motor 61. In a possible exemplary embodiment, between single-screw pump 60 or in replacement of a second extracting apparatus (not shown) can be arranged that carries out a fine extraction of the product through a finer screen.

The controlled conveyance of the waste in second outlet 40 can be made through a controlled discharge of the waste through a mouth 41 by a device 42. More precisely, as shown in figure 2, by a single-screw pump 43 the waste 26 that move towards outlet 40 arrives in a duct 44 that ends at discharge mouth 41. The device 42 provides a control of the force necessary for opening/closing the discharge mouth thus forming a pile 45 of said waste within the duct that leads to the discharge mouth. The pile 45 is formed against a plug 46 that blocks discharge mouth 41 and prevents the attraction of air back to stator 24, against the flow of the waste. The control of the opening/closing force of the discharge mouth 41 by plug 46 is made through the device 42 that controls a pressure and that is operated responsive to a control signal 47 of the pressure/vacuum conditions in the stator 24. In particular, in case the air is attracted back through the pile of waste 45, the plug 46 is immediately closed so that the pile grows and is compacted by the single-screw pump 43 operated by motor 48. The plug is opened again after that the conditions of predetermined pressure are re-established in stator 24, leaving the pressed waste 49 to be discharged.

The softened product 15 can be conveyed in conditions of controlled vacuum or controlled pressure. In both cases, according to the invention, the controlled conveyance when entering stator 24 and at the outlets 30 and 40 prevents air from being attracted from the outside.

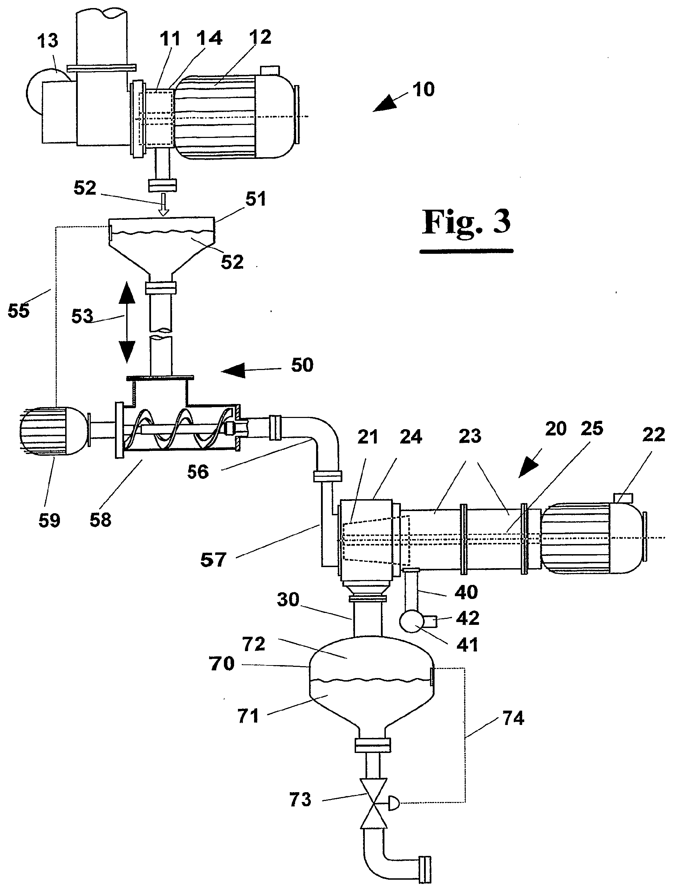

As shown in figure 3, alternatively to figure 1, the choking means have a single-screw pump 58. The adjustment of the softened product conveyance can be made by control sensor 55, which senses the height of head 53, so that the rotation of the pump 58, by a motor 59, is carried out responsive to a signal provided by control sensor 55 same. The rotation of pump 58 is carried out in order to control the motion of the softened product downstream of the pump, and to assure that there is always a head of softened product 51 in the storage unit.

In case the softened product 15 is conveyed in conditions of positive pressure, the extraction is carried out with the product in the stator 24 in conditions of positive pressure. In this case, the rotation of the pump is carried out so that downstream pump 58 there are conditions of positive pressure. The controlled conveyance of the waste in second outlet 40 is carried out always by a controlled discharge of the waste from mouth 41 by device 42.

Concerning the controlled conveyance of the juice or puree at first outlet 30, to assure the conditions of positive pressure, a storage reservoir 70 of juice or puree 71 is provided downstream, with a gas 72 that fills the vacuum fraction of the reservoir 70. Downstream of a head of puree or juice 71 a choking valve is provided 73 associated to control means 74 that open said valve 73 responsive to the level achieved by the head of puree or juice 71 in said reservoir 70 and allow the outlet without that the gas 72 exits therefrom.

The gas can be a gas not containing oxygen. It can be either an inert gas, and in this case it will be mixed in the puree thus replacing the air and avoiding oxidation, or it can be a gas reacting with the product, such as ozone that, once mixed in the product, can cause chemical reactions for decelerating or inhibiting the enzymatic processes.

The gas can be also air. In fact, the oxygen present in such air would react with the product in a very short time and then would behave as a vapour and gas not capable to affect further the properties of the puree or juice. The small amount of air added for keeping the conditions of positive pressure very slight if the inlet 57 in the stator and second outlet 40 are correctly sealed according to the invention, avoiding the above described drawbacks.

## Claims

1. A process for extracting in a controlled environment juice or puree from a product based on animal or vegetable food, said extraction being carried out in an extracting machine starting from a previously softened product, said extracting machine comprising:
- a stator (14) having at least one inlet (57) and at least a first and a second outlet (30,40), a screen in said stator (14) with a plurality of holes, at least one bladed rotor (11) that rotates within said screen; wherein the steps are provided of:
- feeding the previously softened product through said inlet to assist the extraction;
- extracting puree or juice by means of rotation of said rotor (11) that pushes said softened product against said screen, with production of puree or juice through said first outlet (30);
- disposing of the waste not passed through the screen through said second outlet (40);
**characterised in that** it provides the further steps of:
- feeding said softened product at a predetermined section upstream from said inlet (57);
- controlling the conveyance of said softened product from said upstream section up to said inlet (57), preventing air from being attracted through said section;
- controlling the conveyance of said juice or puree in said first outlet (30), preventing air from being attracted in said stator (14) through said first outlet (30);
- controlling the conveyance of said waste in said second outlet (40), preventing air from being attracted in said stator (14) through said second outlet (40);
**in that** said product is fed from said upstream section to said inlet (57) according to a certain head (53) of softened product (52) created within a storage unit (51), the pressure of said head (53) causing the absence of air bubbles and preventing air from being attracted through said section;
and **in that** a sensing step is provided of the level of said softened product (52) in the storage unit (51) that generate a level signal, said sensing step carried out by a sensor means (55), said controlled conveyance of said softened product (52) from said upstream section to said inlet (57) being responsive to said level signal generated by said sensor means (55).

2. Extracting process, according to claim 1, where a baric control is provided of the conditions of positive pressure/vacuum of the product in said stator (14) with respect to the atmosphere, in order to prevent air from being attracted into said stator (14) through said first and second outlet (30,40) and said section.

3. Extracting process, according to claim 1, wherein said controlled conveyance of said juice or puree in said first outlet (30) is carried out by a vacuum pump (60), in particular a single-screw pump.

4. Extracting process, according to claim 1, wherein said controlled conveyance of said waste in said second outlet (40) is made through pushing means of said waste in a duct downstream of the second outlet (40) that leads said waste to a discharge mouth, an element for closing said mouth being provided forming a pile of said waste in said duct slowly moving towards the discharge mouth, said pile moving towards said mouth acting as a plug against the attraction of air in said stator (14) against the flow of said waste, means being provided for controlling the pressure of said closure member for adjusting the flow of said pile through said mouth.

5. Extracting process, according to claim 4, wherein said step of controlling the pressure of said closure member for controlling the conveyance of said waste is carried out responsive to the pressure/vacuum conditions in said stator (14).

6. Extracting process, according to claim 1, wherein said step of controlling the conveyance of said softened product from said section up to said inlet is carried out arranging choking means and means for adjusting an opening grade of said choking means at said section, whereby said product pass through said section to said inlet in vacuum conditions, and said extraction is carried out in said stator (14) in vacuum conditions.

7. Extracting process, according to claim 1, wherein said means for controlling the conveyance have a pump (60), such as a single-screw pump, said means for adjusting causing a rotation of said pump (60) so that downstream said pump (60) there are vacuum conditions.

8. Extracting process, according to claim 1, wherein said means for controlling the conveyance have a peristaltic pump, upstream from said peristaltic pump suction means being provided, whereby downstream said pump there are vacuum conditions.

9. Extracting process, according to claim 1, wherein said step of controlling the conveyance of said softened product from said section up to said inlet is carried out arranging pumping means and means for adjusting said pumping means at said section, whereby said product pass through said section to said inlet in conditions of positive pressure, and said extraction is carried out in said stator (14) in conditions of positive pressure.

10. Extracting process, according to claim 9, wherein said pumping means advantageously have a single-screw pump, said means for adjusting causing a rotation of said pump so that downstream said pump there are conditions of positive pressure.

11. Extracting process, according to claim 9, wherein a baric control is provided of the conditions of positive pressure in said stator (14) by the introduction in said stator (14) of gas not containing oxygen.

12. Extracting process, according to claim 9, wherein said controlled conveyance of the juice or puree towards said first outlet (30), to assure said conditions of positive pressure, is associated downstream said first outlet (30) to a storage reservoir (70) of said juice or puree, with a gas that fills the vacuum fraction of said reservoir (70).

13. Extracting process, according to claim 12, wherein said gas is selected from the group: an inert gas; a gas reacting with the product capable of causing chemical reactions for decelerating or inhibiting the enzymatic and pectolytic processes; air, in small amount, for keeping the conditions of positive pressure.

14. Extracting process, according to claim 13, wherein said gas reacting with the product is ozone.

## Patentansprüche

1. Verfahren zur Extraktion von Saft oder Mus aus einem Produkt, das auf tierischen oder pflanzlichen Nahrungsmitteln besteht, in einer kontrollierten Umgebung, wobei diese Extraktion in einer Extraktionsmaschine beginnend mit einem zuvor weich gemachten Produkt durchgeführt wird, wobei diese Extraktionsmaschine Folgendes umfasst:
- einen Stator (14) mit mindestens einem Einlass (57) und mindestens einem ersten und einem zweiten Auslass (30,40), einer Schutzwand mit einer Vielzahl von Löchern in diesem Stator (14), mindestens einem Rotor (11) mit Flügeln, der sich innerhalb dieser Schutzwand dreht; wobei folgende Schritte dargeboten werden:
- Einspeisung des zuvor weich gemachten Produkts durch den Einlass zur Unterstützung der Extraktion;
- Extraktion von Mus oder Saft mittels der Rotation des Rotors (11), der das weich gemachte Produkt gegen die Schutzwand drückt, so dass durch den ersten Auslass (30) Mus oder Saft produziert wird;
- Entsorgung von Abfall, der nicht durch die Schutzwand geht, durch den zweiten Auslass (40);
**gekennzeichnet dadurch, dass** weiter folgende Schritte dargeboten werden:
- Einspeisung des weich gemachten Produkts in einen zuvor bestimmten Abschnitt, der dem Einlasses (57) vorgeschaltet ist;
- Kontrolle der Beförderung des weich gemachten Produkts von diesem vorgeschalteten Abschnitt zum Einlass (57), damit verhindert wird, dass durch diesen Abschnitt Luft angezogen wird;
- Kontrolle der Beförderung des Safts oder des Mus im ersten Auslass (30), damit verhindert wird, dass im Stator (14) durch den ersten Auslass (30) Luft angezogen wird;
- Kontrolle der Beförderung des Abfalls im zweiten Auslass (40), damit verhindert wird, dass im Stator (14) durch den zweiten Auslass (40) Luft angezogen wird;
**wobei** das Produkt von diesem vorgeschalteten Abschnitt zum Einlass (57) eingespeist wird, gemäß einem bestimmten Schaum (53) des weich gemachten Produkts (52), der innerhalb einer Speichereinheit (51) gebildet wird, wobei der Druck dieses Schaums (53) dafür sorgt, dass keine Luftbläschen vorhanden sind, und verhindert, dass durch diesen Abschnitt Luft angezogen wird; **und wobei** ein Erfassungsschritt für den Stand des weich gemachten Produkts (52) in der Speichereinheit (51) vorgesehen ist, der ein Standsignal erzeugt, wobei dieser Erfassungsschritt von einer Sensorvorrichtung (55) ausgeführt wird, wobei die kontrollierte Beförderung des weich gemachten Produkts (52) von diesem vorgeschalteten Abschnitt zum Einlass (57) auf dieses Standsignal, das von der Sensorvorrichtung (55) erzeugt wird, anspricht.

2. Extraktionsverfahren gemäß Anspruch 1, wobei für die Bedingungen des positiven Drucks/Vakuums des Produkts im Stator (14) in Bezug auf die Atmosphäre eine Druckkontrolle dargeboten wird, um zu verhindern, dass im Stator (14) durch den ersten und den zweiten Auslass (30, 40) und den Abschnitt Luft angezogen wird;

3. Extraktionsverfahren gemäß Anspruch 1, wobei die kontrollierte Beförderung des Safts oder des Mus im ersten Auslass (30) durch eine Vakuumpumpe (60) ausgeführt wird, insbesondere eine Einschneckenpumpe.

4. Extraktionsverfahren gemäß Anspruch 1, wobei die kontrollierte Beförderung des Abfalls in diesem zweiten Auslass (40) durch Druckmittel erfolgt, die diesen Abfall in einen Kanal drücken, der dem zweiten Auslass (40) nachgeschaltet ist und der diesen Abfall zu einer Ausgabeöffnung leitet, wobei ein Element zum Schließen dieser Öffnung bereitgestellt wird, so dass in diesem Kanal ein Haufen dieses Abfalls entsteht, der sich langsam auf die Ausgabeöffnung zu bewegt, wobei dieser Haufen, der sich auf die Öffnung zu bewegt, wie ein Stöpsel gegen das Anziehen von Luft in diesem Stator (14) gegen den Strom dieses Abfalls wirkt, wobei Mittel bereitgestellt werden, um den Druck dieses Schließglieds zu kontrollieren, um den Strom des Haufens durch diese Öffnung anzupassen.

5. Extraktionsverfahren gemäß Anspruch 4, wobei der Schritt zur Kontrolle des Drucks dieses Schließglieds zur Kontrolle der Beförderung des Abfalls so ausgeführt ist, dass er auf die Druck-/Vakuumbedingungen im Stator (14) anspricht.

6. Extraktionsverfahren gemäß Anspruch 1, wobei dieser Schritt zur Kontrolle der Beförderung des weich gemachten Produkts von diesem Abschnitt hin zu diesem Einlass ausgeführt wird durch die Anordnung von Drosselvorrichtungen und Vorrichtungen zur Anpassung eines Öffnungsgrads dieser Drosselvorrichtungen in diesem Abschnitt, so dass das Produkt unter Vakuumbedingungen durch diesen Abschnitt zum Einlass strömt und diese Extraktion im Stator (14) unter Vakuumbedingungen ausgeführt wird.

7. Extraktionsverfahren gemäß Anspruch 1, wobei diese Vorrichtungen zur Kontrolle der Beförderung eine Pumpe (60), wie eine Einschneckenpumpe, haben, und wobei diese Vorrichtungen zur Anpassung eine Rotation dieser Pumpe (60) hervorrufen, so dass nachgeschaltet zu dieser Pumpe (60) Vakuumbedingungen vorliegen.

8. Extraktionsverfahren gemäß Anspruch 1, wobei diese Mittel zur Kontrolle der Beförderung mit einer Peristaltikpumpe versehen sind, wobei vorgeschaltet vor dieser Peristaltikpumpe eine Absaugvorrichtung bereitgestellt wird und wobei nachgeschaltet nach dieser Pumpe Vakuumbedingungen vorliegen.

9. Extraktionsverfahren gemäß Anspruch 1, wobei dieser Schritt zur Kontrolle der Beförderung des weich gemachten Produkts von diesem Abschnitt hin zu diesem Einlass ausgeführt wird durch die Anordnung von Pumpvorrichtungen und Vorrichtungen zur Anpassung dieser Pumpvorrichtungen in diesem Abschnitt, so dass das Produkt unter Bedingungen mit positivem Druck durch diesen Abschnitt zum Einlass strömt und diese Extraktion im Stator (14) unter Bedingungen mit positivem Druck ausgeführt wird.

10. Extraktionsverfahren gemäß Anspruch 9, wobei diese Pumpvorrichtungen vorzugsweise über eine Einschneckenpumpe verfügen, wobei diese Vorrichtungen zur Anpassung eine Rotation dieser Pumpe hervorrufen, so dass nachgeschaltet zu dieser Pumpe Bedingungen mit positivem Druck vorliegen.

11. Extraktionsverfahren gemäß Anspruch 9, wobei eine Druckkontrolle für die Bedingungen mit positivem Druck im Stator (14) dargeboten wird, indem in diesen Stator (14) ein Gas eingebracht wird, das keinen Sauerstoff enthält.

12. Extraktionsverfahren gemäß Anspruch 9, wobei die kontrollierte Beförderung des Safts oder des Mus zu diesem ersten Auslass (30) nachgeschaltet zu diesem ersten Auslass (30) mit einem Speicherbehälter (70) für den Saft oder das Mus verbunden ist, der ein Gas enthält, das den Vakuumteil des Speicherbehälters (70) füllt, um diese Bedingungen mit positivem Druck sicherzustellen.

13. Extraktionsverfahren gemäß Anspruch 12, wobei dieses Gas ausgewählt ist aus der Gruppe, die Folgendes umfasst: ein Inertgas; ein Gas, das durch Reaktion mit dem Produkt in der Lage ist, chemische Reaktionen zur Verlangsamung oder Hemmung der enzymatischen und pektolytischen Prozesse hervorzurufen; Luft in kleinen Mengen, um die Bedingungen mit positivem Druck aufrecht zu erhalten.

14. Extraktionsverfahren gemäß Anspruch 13, wobei dieses Gas, das mit dem Produkt reagiert, Ozon ist.

## Revendications

1. Un procédé pour l'extraction, en milieu contrôlé, d'un jus ou d'une purée d'un produit à base d'aliments animaux ou végétaux, cette extraction étant effectuée dans une machine d'extraction à partir d'un produit préalablement ramolli, ladite machine d'extraction comprenant :
- un stator (14) possédant au moins une entrée (57) et au moins une première et une deuxième sortie (30,40), un écran dans ledit stator (14) ayant une pluralité d'orifices, au moins un rotor à aubes (11) tournant au sein dudit écran ; les étapes suivantes étant prévues :
- l'introduction du produit préalablement ramolli dans ladite entrée, afin de faciliter l'extraction ;
- l'extraction de la purée ou du jus par le biais de la rotation dudit rotor (11) poussant ledit produit ramolli contre ledit écran, avec production d'une purée ou d'un jus par ladite première sortie (30) ;
- l'élimination des déchets non passés à travers l'écran, à travers ladite deuxième sortie (40) ; **caractérisée en ce qu'**il comporte les étapes supplémentaires suivantes :
- alimentation dudit produit ramolli à une section prédéterminée en amont de ladite entrée (57) ;
- contrôle du transport dudit produit ramolli de ladite section en amont jusqu'à ladite entrée (57), en empêchant que de l'air ne soit attiré dans ladite section ;
- contrôle du transport dudit jus ou de ladite purée dans ladite première sortie (30), en empêchant que de l'air ne soit attiré dans ledit stator (14) à travers ladite première sortie (30) ;
- contrôle du transport desdits déchets dans ladite deuxième sortie (40), en empêchant que de l'air ne soit attiré dans ledit stator (14) à travers ladite deuxième sortie (40) ;
**en ce que** ledit produit est alimenté de ladite section en amont dans ladite entrée (57) en fonction d'une certaine hauteur (53) de produit ramolli (52) créée dans un dispositif de stockage (51), la pression de ladite hauteur (53) engendrant l'absence de bulles et empêchant l'attraction d'air à travers ladite section ;
et **en ce que** une étape de détection du niveau dudit produit ramolli (52) dans ledit dispositif de stockage (51), produisant un signal de niveau, est prévue, ladite étape de détection étant effectuée par un capteur (55), ledit transport contrôlé dudit produit ramolli (52) de ladite section en amont à ladite entrée (57) étant sensible audit signal de niveau généré par ledit capteur (55).

2. Un procédé d'extraction, selon la revendication 1, comprenant un régulateur de pression pour les conditions de pression positive/vide du produit dans ledit stator (14) relativement à l'atmosphère, afin d'empêcher que de l'air ne soit attiré dans ledit stator (14) à travers lesdits première et deuxième sortie (30,40) et ladite section.

3. Un procédé d'extraction, selon la revendication 1, ledit transport contrôlé dudit jus ou de ladite purée dans ladite première sortie (30) est effectué par une pompe à vide (60), notamment une pompe à vis unique.

4. Un procédé d'extraction, selon la revendication 1, dans lequel ledit transport contrôlé desdits déchets dans la deuxième sortie (40) est effectué par le dispositif de refoulement desdits déchets dans un conduit en aval de la deuxième sortie (40) amenant lesdits déchets à un embout de décharge, un élément de fermeture dudit embout étant prévu, et formant une pile desdits déchets dans ledit conduit, et son déplacement à faible vitesse vers l'embout de décharge, ladite pile se déplaçant vers ledit embout agissant comme un bouchon contre l'attraction de l'air dans ledit stator (14) contre l'écoulement desdits déchets, un dispositif étant prévu pour la régulation de la pression dudit élément de fermeture afin d'ajuster l'écoulement de ladite pile par ledit embout.

5. Le procédé d'extraction, selon la revendication 4, ladite étape de régulation de ladite pression dudit élément de fermeture pour contrôler ledit transport desdits déchets étant effectuée en fonction de la pression / du vide dans ledit stator (14).

6. Le procédé d'extraction, selon la revendication 1, ladite étape de régulation du transport dudit produit ramolli de ladite section jusqu'à ladite entrée étant effectuée en réglant le dispositif d'étranglement et un dispositif d'ajustage d'un degré d'ouverture dudit dispositif d'étranglement à ladite section, ledit produit passant par ladite section jusqu'à ladite entrée dans des conditions de vide, et cette extraction étant effectuée dans ledit stator (14) dans des conditions sous vide.

7. Le procédé d'extraction, selon la revendication 1, ledit dispositif de régulation du transport comprenant une pompe (60), par exemple une pompe à vis unique, ce dispositif de réglage causant la rotation de ladite pompe (60) de façon à assurer la présence d'un vide en aval de ladite pompe (60).

8. Le procédé d'extraction, selon la revendication 1, ledit dispositif de régulation du transport comprenant une pompe péristaltique, en amont de laquelle se trouvant un dispositif d'aspiration, et en aval de ladite pompe se trouvant des conditions de vide.

9. Le procédé d'extraction, selon la revendication 1, ladite étape de régulation du transport dudit produit ramolli de ladite section jusqu'à ladite entrée étant effectuée par l'agencement du dispositif de pompage et un dispositif d'ajustage dudit dispositif de pompage à ladite section, ledit produit passant par ladite section jusqu'à ladite entrée en condition de pression positive, et ladite extraction étant effectuée dans ledit stator (14) dans des conditions de pression positive.

10. Le procédé d'extraction, selon la revendication 9, ledit dispositif de pompage possédant avantageusement une pompe à vis unique, ledit dispositif d'ajustage entraînant une rotation de ladite pompe, de sorte qu'en aval de la pompe on se trouve en condition de pression positive.

11. Le procédé d'extraction, selon la revendication 9, une régulation de la pression étant assurée pour contrôler la pression positive dans ledit stator (14) en introduisant dans ledit stator (14) un gaz ne contenant pas d'oxygène.

12. Le procédé d'extraction, selon la revendication 9, ledit transport contrôlé du jus ou de la purée vers ladite sortie (30), pour assurer la présence de conditions d'une pression positive, étant associé, en aval de ladite première sortie (30), avec un réservoir de stockage (70) dudit jus ou de ladite purée, un gaz remplissant la fraction de vide dudit réservoir (70).

13. Le procédé d'extraction, selon la revendication 12, ledit gaz étant sélectionné dans le groupe suivant : un gaz inerte ; un gaz réagissant avec le produit capable de causer des réactions chimiques pour ralentir ou empêcher les procédés enzymatiques et pectolytiques ; de l'air, en petite volumes, pour le maintien des conditions en pression positive.

14. Le procédé d'extraction, selon la revendication 13, ledit gaz réagissant avec le produit étant de l'ozone.
